# FASCICULE DE BREVET EUROPEEN

(11) **EP 4 626 786 B1**
(45) Date de publication et mention de la délivrance du brevet: **28.10.2026**
(21) Numéro de dépôt: 23825418.9
(22) Date de dépôt: 28.11.2023
(51) Int. Cl.: B64D 11/06, B60N 2/02

(54) **COMMANDE D'UNE INSTALLATION MOBILIÈRE D'UN AÉRONEF**
STEUERUNG EINER FLUGZEUGMÖBELINSTALLATION
CONTROL OF AN AIRCRAFT FURNITURE INSTALLATION

(30) Priorité: 28.11.2022 FR 2212445
(43) Date de publication de la demande: 08.10.2025
(73) Titulaire: Safran Electronics & Defense Actuation, 89000 Auxerre (FR)
(72) Inventeur: TREMOLLIERES, Matthieu, 77550 MOISSY-CRAMAYEL (FR); RAMASAMY, Kevin, 77550 MOISSY-CRAMAYEL (FR); VIRLOT, Geoffrey, 77550 MOISSY-CRAMAYEL (FR); NIVET, Laurent, 77550 MOISSY-CRAMAYEL (FR)
(74) Mandataire: Gevers & Orès
(86) Numéro de dépôt international: PCT/FR2023/051859
(87) Numéro de publication internationale: WO 2024/115849

(56) Documents cités:
- EP-B1- 0 896 560
- EP-B1- 1 103 412
- FR-A1- 2 821 252
- FR-A1- 2 912 621

## Description

### Domaine technique de l'invention

La présente invention concerne un procédé de commande d'une installation mobilière d'un aéronef, un programme d'ordinateur associé, un système de commande d'une installation mobilière d'un aéronef et un aéronef comportant un tel système de commande.

### Arrière-plan technologique

Afin d'améliorer le confort des passagers, de nombreux sièges sont munis de dispositifs électriques d'actionnement permettant de modifier la configuration du siège par déplacement d'éléments mobiles de celui-ci.

Par exemple, un tel siège comporte un dossier inclinable et un repose-pieds chacun articulé à une extrémité d'une assise. Ceux-ci sont chacun déplacés par un actionneur propre. Le siège lui-même est parfois déplaçable globalement par rapport à un sol de l'aéronef.

Par la suite, l'expression « déplacement du siège » sera à comprendre comme désignant à la fois un déplacement d'un ou plusieurs éléments mobiles du siège et un déplacement du siège dans sa globalité.

Un tel siège est modélisé mécaniquement par un ensemble de points particuliers, par exemple l'extrémité libre du dossier ou du repose-pieds, et chaque point particulier est déplacé suivant une trajectoire préalablement définie qui lui est associée et permettant à chaque point particulier d'éviter les obstacles pour passer d'une première à une seconde position prédéterminée.

Lorsque certaines parties du siège heurtent des obstacles, cela peut conduire à la dégradation de ces obstacles et/ou du siège.

Pour éviter ce problème, il a été décrit dans la demande de brevet publiée sous le numéro FR 2 821 252 A1, un procédé de commande d'une installation mobilière d'aéronef, l'installation mobilière comportant un siège et un objet mobile, comportant :
- une réception d'une commande de déplacement du siège ;
- une réception d'une position d'au moins un élément du siège et d'au moins une position de l'objet mobile ;
- une détermination d'une zone interdite pour le siège, en fonction de la position de l'objet mobile ;
- un déplacement du siège selon la commande reçue ; et
- une comparaison de la position de chaque élément du siège avec la zone interdite.

Dans cette demande de brevet, le siège est stoppé lorsqu'il atteint la zone interdite, de sorte qu'il ne peut pas atteindre la position souhaitée par l'utilisateur.

Il peut ainsi être souhaité de prévoir un procédé qui permette de s'affranchir d'au moins une partie des problèmes et contraintes précités.

### Résumé de l'invention

Il est donc proposé un procédé de commande d'une installation mobilière d'aéronef, tel que défini dans la revendication 1.

Ainsi, grâce à l'invention, le risque de collision avec l'objet mobile est réduit et le siège peut atteindre la position souhaitée par l'utilisateur.

L'invention peut en outre comporter l'une ou plusieurs des caractéristiques optionnelles suivantes, selon toute combinaison techniquement possible.

De façon optionnelle, les positions sont déterminées dans un repère cartésien.

De façon optionnelle également, la zone interdite est définie par un ou plusieurs segments de droite rectilignes.

De façon optionnelle également, le siège comporte plusieurs éléments mobiles entre eux, et le déplacement du siège comporte un déplacement d'au moins un des éléments du siège.

De façon optionnelle également, l'objet mobile comporte plusieurs éléments mobiles entre eux, la position de l'objet mobile est une position d'au moins un des éléments de l'objet mobile et le déplacement de l'objet mobile comporte un déplacement d'au moins un des éléments de l'objet mobile.

De façon optionnelle également, l'objet mobile est un autre siège.

Il est également proposé un système selon la revendication 7, un aéronef selon la revendication 8 et un programme selon la revendication 9.

### Brève description des figures

L'invention sera mieux comprise à l'aide de la description qui va suivre, donnée uniquement à titre d'exemple et faite en se référant aux dessins annexés dans lesquels :
- la figure 1 est une vue de côté d'un exemple d'installation mobilière d'aéronef, selon l'invention, comportant deux sièges,
- la figure 2 est un schéma-bloc d'un procédé de commande des sièges de l'installation mobilière de la figure 1,
- la figure 3 illustre une autre configuration initiale des sièges que celle de la figure 1,
- la figure 4 illustre une configuration intermédiaire des sièges, et
- la figure 5 illustre une configuration finale des sièges.

### Description détaillée de l'invention

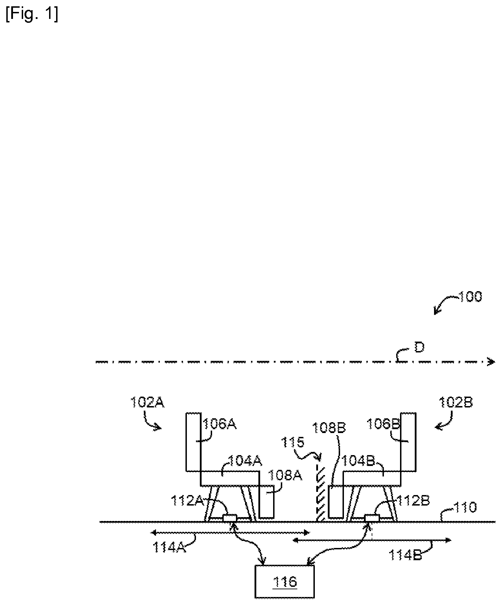

En référence à la figure 1, un exemple d'installation mobilière 100 d'aéronef, selon l'invention, va à présent être décrit.

L'installation mobilière 100 comporte tout d'abord deux sièges 102A, 102B se faisant face. Chaque siège 102A, 102B comporte plusieurs éléments, comme par exemple une assise 104A, 104B, un dossier 106A, 106B et un repose pieds 108A, 108B.

Les sièges 102A, 102B sont conçus pour se déplacer par translation, par rapport à un sol 110 de l'aéronef, selon une direction D, pour se rapprocher ou bien s'éloigner l'un de l'autre. Par la suite, les éléments 104A, 106A, 108A, 104B, 106B, 108B de chaque siège 102A, 102B sont considérés comme restants fixes les uns par rapport aux autres, de sorte que le seul déplacement considéré est la translation selon la direction D. Ainsi, il est possible de considérer que chaque siège 102A, 102B est formé d'un seul élément.

Pour cela, chaque siège 102A, 102B comporte un actionneur respectif 112A, 112B conçu pour déplacer le siège 102A, 102B le long de la direction D, sur une course prédéfinie respective 114A, 114B. Comme cela est illustré, les courses 114A, 114B se chevauchent de sorte que les sièges 102A, 102B peuvent se heurter.

Chaque actionneur 112A, 112B est en outre conçu pour transmettre une position, le long de la direction D dans l'exemple illustré, du siège 102A, 102B qu'il déplace. Cette position est par exemple déterminée dans un repère cartésien fixé au sol 110.

La position du siège 102B définit une zone interdite 115 pour le siège 102A. Cette zone interdite 115 entoure le siège 102B et correspond à des points de l'espace que le siège 102A ne doit pas occuper afin d'éviter une collision avec le siège 102B. La position de la zone interdite 115 évolue avec le déplacement du siège 102B, par exemple elle se déplace avec le déplacement du siège 102B. Dans l'exemple simple illustré sur la figure 1, la zone interdite 115 correspond à un demi-plan défini par un segment de droite vertical se déplaçant avec le siège 102B.

L'installation mobilière 100 comporte en outre un système de commande 116 connecté aux deux actionneurs 112A, 112B pour les commander afin de déplacer les sièges 102A, 102B et pour recevoir les positions des sièges 102A, 102B.

Par exemple, le système de commande 116 est un système informatique comportant une unité de traitement de données (telle qu'un microprocesseur) et une mémoire principale (telle qu'une mémoire RAM, de l'anglais « Random Access Memory ») accessible par l'unité de traitement. Le système informatique peut en outre comporter une interface réseau et/ou un support lisible par ordinateur, comme par exemple un support local (tel qu'un disque dur local) ou bien un support distant (tel qu'un disque dur distant et accessible via l'interface réseau au travers d'un réseau de communication) ou bien encore un support amovible (tel qu'une clé USB, de l'anglais « Universal Serial Bus », ou bien un CD, de l'anglais « Compact Disc » ou bien un DVD, de l'anglais « Digital Versatile Disc ») lisible au moyen d'un lecteur approprié du système informatique (tel qu'un port USB ou bien un lecteur de disque CD et/ou DVD). Un programme d'ordinateur contenant des instructions pour l'unité de traitement est enregistré sur le support et/ou téléchargeable via l'interface réseau. Ce programme d'ordinateur est par exemple destiné à être chargé dans la mémoire principale, afin que l'unité de traitement exécute ses instructions, pour mettre en oeuvre les étapes du procédé qui sera décrit par la suite.

Alternativement, tout ou partie de ces étapes pourrait être implémenté sous forme de modules matériels, c'est-à-dire sous forme d'un circuit électronique, par exemple micro-câblé, ne faisant pas intervenir de programme d'ordinateur.

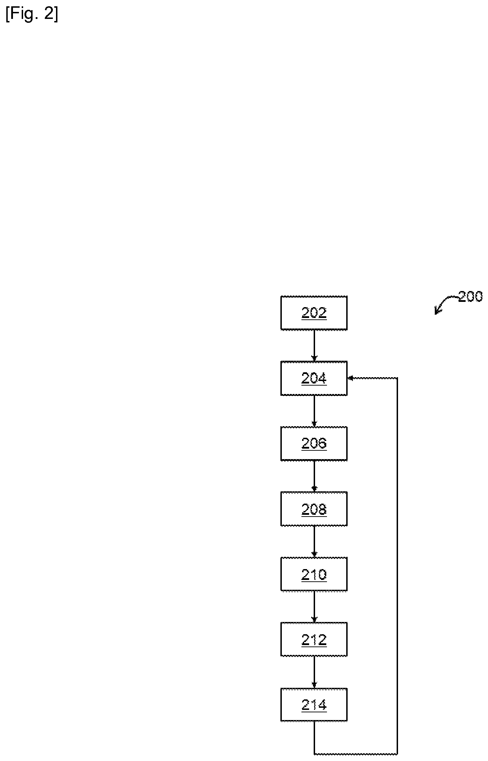

En référence à la figure 2, un exemple d'un procédé 200 de commande des sièges 102A, 102B va à présent être décrit.

Au cours d'une étape 202, le système de commande 116 reçoit une commande de déplacement du siège 102A, une translation en direction du siège 102B dans l'exemple illustré.

Au cours d'une étape 204, le système de commande 116 reçoit les positions des sièges 102A, 102B.

Au cours d'une étape 206, le système de commande 116 détermine la zone interdite 115 pour le siège 102A, en fonction de la position du siège 102B.

Au cours d'une étape 208, le système de commande 116 déplace le siège 102A selon la commande reçue, c'est-à-dire en direction du siège 102B.

Au cours d'une étape 210, le système de commande 116 compare la position du siège 102A avec la zone interdite 115.

Si la comparaison indique que le siège 102A atteint la zone interdite 115, le système de commande 116 détermine, au cours d'une étape 212, un déplacement du siège 102B pour écarter la zone interdite 115 du siège 102A. Par exemple, le système de commande 116 comporte au moins une association prédéfinie associant un déplacement du siège 102A à un déplacement du siège 10B écartant la zone interdite 115. Ainsi, le déplacement du siège 102B pour écarter la zone interdite 115 du siège 102A, est le déplacement associé au déplacement en cours du siège 102A, d'après la ou les associations prédéfinies. Dans l'exemple simple de la figure 1, le système de commande 116 comporte par exemple une association entre un déplacement vers l'avant du siège 102A et un déplacement vers l'arrière du siège 102B. Ainsi, dans l'exemple décrit, le système de commande 116 sélectionne le déplacement vers l'arrière du siège 102B.

Au cours d'une étape 214, le système de commande 116 déplace le siège 102B suivant le déplacement déterminé à l'étape précédente.

Le procédé 200 retourne alors à l'étape 204 et continue de mettre en oeuvre cette boucle d'étapes jusqu'à ce que le siège 102A atteigne sa position finale.

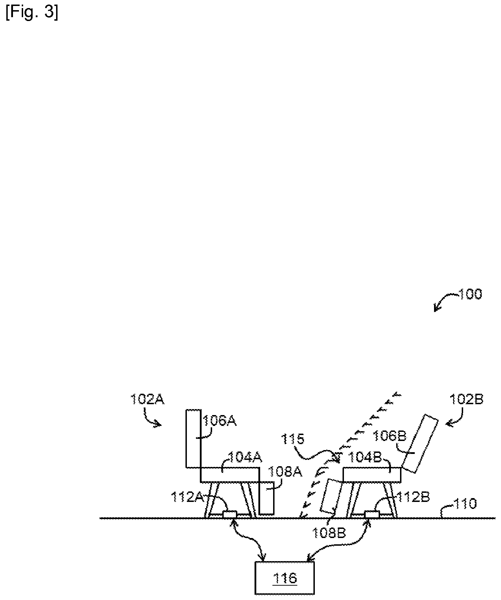

En référence à la figure 3, les éléments 104A, 106A, 108A, 104B, 106B, 108B de chaque siège 102A, 102B sont cette fois mobiles les uns par rapport aux autres. En particulier, le repose pieds et le dossier sont chacun conçus pour pivoter par rapport à l'assisse pour faire passer le siège d'une configuration de siège à une configuration de lit.

Des actionneurs (non représentés) similaires aux actionneurs 112A, 112B sont alors prévus pour permettre ces mouvements et transmettre les positions des différents éléments. Ces positions sont par exemple déterminées dans un repère cartésien fixé au sol 110.

La zone interdite 115 est cette fois définie par plusieurs segments de droites dont les positions relatives dépendent des positions relatives des éléments du siège 102B.

Le procédé de la figure 2 peut à nouveau être appliqué.

Ainsi, au cours d'une étape 202, le système de commande 116 reçoit une commande de déplacement du siège 102A, par exemple un passage de la configuration de siège à celle de lit.

Au cours d'une étape 204, le système de commande 116 reçoit les positions des éléments des sièges 102A, 102B. Par exemple, le siège 102B est dans une configuration intermédiaire entre la position de siège et la position de lit.

Au cours d'une étape 206, le système de commande 116 détermine la zone interdite 115 pour le siège 102A, en fonction des positions des éléments du siège 102B.

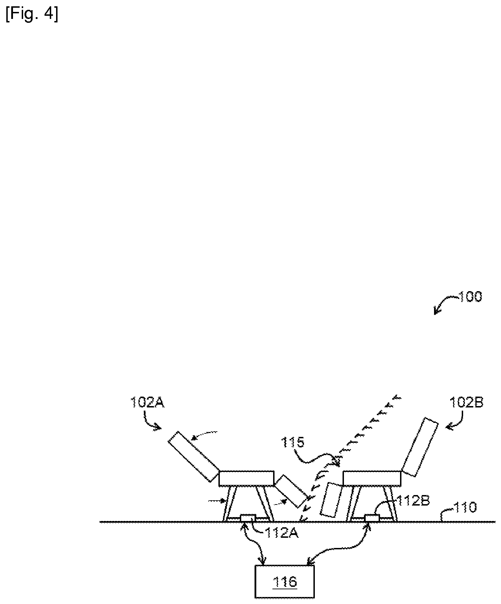

Au cours d'une étape 208, le système de commande 116 déplace le siège 102A selon la commande reçue, c'est-à-dire en inclinant le dossier et le repose pieds, tout en avançant l'assisse (voir la figure 4).

Au cours d'une étape 210, le système de commande 116 compare la position des éléments du siège 102A avec la zone interdite 115. Cette comparaison est par exemple faite en comparant au moins un point critique de chacun d'au moins un élément (généralement un point d'extrémité de l'élément) à la zone interdite 115.

Si la comparaison indique que le siège 102A atteint la zone interdite 115 (voir la figure 4 où le repose pieds 108A atteint la zone interdite 115), le système de commande 116 détermine, au cours d'une étape 212, un déplacement d'au moins un élément du siège 102B pour écarter la zone interdite 115 du siège 102A. Par exemple, le système de commande 116 comporte au moins une association prédéfinie associant un déplacement d'au moins un élément du siège 102A à un déplacement d'au moins un élément du siège 102B écartant la zone interdite 115. Ainsi, le déplacement du siège 102B pour écarter la zone interdite 115 du siège 102A, est le déplacement associé au déplacement en cours du siège 102A, d'après la ou les associations prédéfinies. Dans l'exemple décrit, le système de commande 116 comporte par exemple une association entre un déplacement vers la configuration de lit du siège 102A et un déplacement vers la configuration de siège du siège 102B. Ainsi, dans l'exemple décrit, le système de commande 116 sélectionne le déplacement du siège 102B vers sa position de siège.

Au cours d'une étape 214, le système de commande 116 déplace le siège 102B suivant le déplacement déterminé à l'étape précédente.

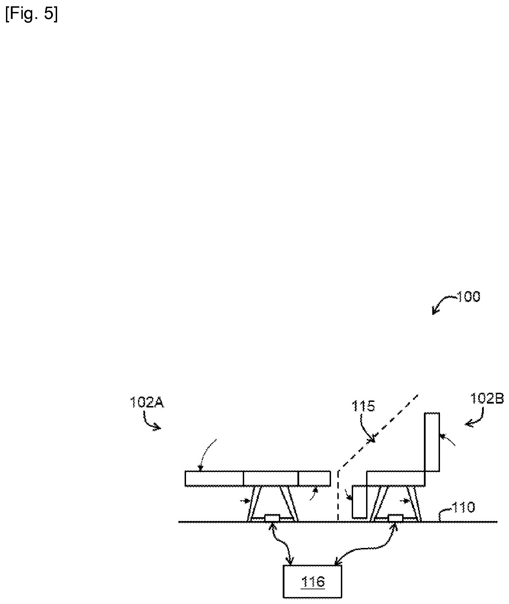

Le procédé 200 retourne alors à l'étape 204 et continue de mettre en œuvre cette boucle d'étapes jusqu'à ce que le siège 102A atteigne sa position finale (voir la figure 5).

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, les rôles des sièges 102A, 102B pourraient être interchangés.

En outre, le siège 102B pourrait être un autre objet mobile, pouvant être déplacé par le système de commande 116, comme : une table, un mini-bar, un plateau repas, un écran, etc.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Procédé de commande d'une installation mobilière (100) d'aéronef, l'installation mobilière (100) comportant un siège (102A) et un objet mobile (102B), comportant :
- une réception (202) d'une commande de déplacement du siège (102A) ;
- une réception (204) d'une position d'au moins un élément (104A, 106A, 108A) du siège (102A) et d'au moins une position de l'objet mobile (102B) ;
- une détermination (206) d'une zone interdite (115) pour le siège (102A), en fonction de la position de l'objet mobile (102B) ;
- un déplacement (208) du siège (102A) selon la commande reçue ; et
- une comparaison (210) de la position de chaque élément du siège (102A) avec la zone interdite (115) ;
- si la comparaison indique que le siège (102A) atteint la zone interdite (115), une détermination (212) d'un déplacement de l'objet mobile (102B) écartant la zone interdite (115) du siège (102A) ; et
- un déplacement (214) de l'objet mobile (102B) suivant le déplacement déterminé.

2. Procédé selon la revendication 1, dans lequel les positions sont déterminées dans un repère cartésien.

3. Procédé selon la revendication 1 ou 2, dans lequel la zone interdite (115) est définie par un ou plusieurs segments de droite rectilignes.

4. Procédé selon l'une quelconque des revendications 1 à 3, dans lequel le siège (102A) comporte plusieurs éléments (104A, 106A, 108A) mobiles entre eux, et dans lequel le déplacement du siège (102A) comporte un déplacement d'au moins un des éléments (104A, 106A, 108A) du siège (102A).

5. Procédé selon l'une quelconque des revendications 1 à 3, dans lequel l'objet mobile (102B) comporte plusieurs éléments (104B, 106B, 108B) mobiles entre eux, dans lequel la position de l'objet mobile (102B) est une position d'au moins un des éléments (104B, 106B, 108B) de l'objet mobile (102B) et dans lequel le déplacement de l'objet mobile (102B) comporte un déplacement d'au moins un des éléments (104B, 106B, 108B) de l'objet mobile (102B).

6. Procédé selon l'une quelconque des revendications 1 à 5, dans lequel l'objet mobile (102B) est un autre siège.

7. Système (116) de commande d'une installation mobilière (100) d'aéronef, l'installation mobilière (100) comportant un siège (102A) et un objet mobile (102B), le système comprenant un moyen de déplacement du siège (102A), un moyen de déplacement de l'objet mobile (102B), un moyen de détermination d'une position d'au moins un élément (104A, 106A, 108A) du siège (102A) et un moyen de détermination d'au moins une position de l'objet mobile (102B), le système étant conçu pour mettre en œuvre le procédé selon l'une quelconque des revendications 1 à 6.

8. Aéronef comportant :
- une installation mobilière (100) avec un siège (102A) et un objet mobile (102B) ; et
- un système de commande (116) selon la revendication 7.

9. Programme d'ordinateur téléchargeable depuis un réseau de communication et/ou enregistré sur un support lisible par ordinateur, **caractérisé en ce qu'**il comprend des instructions qui conduisent le système selon la revendication 7 à exécuter les étapes du procédé selon l'une quelconque des revendications 1 à 6, lorsque ledit programme est exécuté sur un ordinateur.

## Patentansprüche

1. Verfahren zur Steuerung einer beweglichen Installation (100) eines Flugzeugs, wobei die bewegliche Installation (100) einen Sitz (102A) und ein mobiles Objekt (102B) umfasst, umfassend:
- einen Empfang (202) eines Befehls der Verschiebung des Sitzes (102A);
- einen Empfang (204) einer Position mindestens eines Teils (104A, 106A, 108A) des Sitzes (102A) und mindestens einer Position des mobilen Objekts (102B);
- eine Bestimmung (206) eines verbotenen Bereichs (115) für den Sitz (102A) in Abhängigkeit von der Position des mobilen Objekts (102B);
- eine Verschiebung (208) des Sitzes (102A) gemäß dem empfangenen Befehl; und
- einen Vergleich (210) der Position jedes Teils des Sitzes (102A) mit dem verbotenen Bereich (115);
- wenn der Vergleich angibt, dass der Sitz (102A) den verbotenen Bereich (115) erreicht, eine Bestimmung (212) einer Verschiebung des mobilen Objekts (102B), die den verbotenen Bereich (115) von dem Sitz (102A) entfernt; und
- eine Verschiebung (214) des mobilen Objekts (102B), die der bestimmten Verschiebung folgt.

2. Verfahren nach Anspruch 1, wobei die Positionen in einem kartesischen Koordinatensystem bestimmt werden.

3. Verfahren nach Anspruch 1 oder 2, wobei der verbotene Bereich (115) durch ein oder mehrere Segmente einer geraden Linie bestimmt wird.

4. Verfahren nach einem der Ansprüche 1 bis 3 wobei der Sitz (102A) mehrere Teile (104A, 106A, 108A) umfasst, die untereinander mobil sind, und wobei die Verschiebung des Sitzes (102A) eine Verschiebung mindestens eines der Teile (104A, 106A, 108A) des Sitzes (102A) umfasst.

5. Verfahren nach einem der Ansprüche 1 bis 3 wobei das mobile Objekt (102B) mehrere Teile (104B, 106B, 108B) umfasst, die untereinander mobil sind, wobei die Position des mobilen Objekts (102B) eine Position mindestens eines der Teile (104B, 106B, 108B) des mobilen Objekts (102B) ist und wobei die Verschiebung des mobilen Objekts (102B) eine Verschiebung mindestens eines der Teile (104B, 106B, 108B) des mobilen Objekts (102B) umfasst.

6. Verfahren nach einem der Ansprüche 1 bis 5, wobei das mobile Objekt (102B) ein anderer Sitz ist.

7. System (116) zur Steuerung einer beweglichen Installation (100) eines Flugzeugs, wobei die bewegliche Installation (100) einen Sitz (102A) und ein mobiles Objekt (102B) umfasst, wobei das System ein Mittel zur Verschiebung des Sitzes (102A), ein Mittel zur Verschiebung des mobilen Objekts (102B), ein Mittel zur Bestimmung einer Position mindestens eines Teils (104A, 106A, 108A) des Sitzes (102A) und ein Teil zur Bestimmung mindestens einer Position des mobilen Objekts (102B) umfasst, wobei das System ausgebildet ist, um das Verfahren nach einem der Ansprüche 1 bis 6 einzusetzen.

8. Flugzeug, umfassend:
- eine bewegliche Installation (100) mit einem Sitz (102A) und einem mobilen Objekt (102B); und
- ein Befehlssystem (116) nach Anspruch 7.

9. Computerprogramm, das von einem Kommunikationsnetzwerk herunterladbar und/oder auf einem computerlesbaren Träger aufgezeichnet ist, **dadurch gekennzeichnet, dass** es Anweisungen umfasst, die das System nach Anspruch 7 veranlassen, die Schritte des Verfahrens nach einem der Ansprüche 1 bis 6 auszuführen, wenn das Programm auf einem Computer ausgeführt wird.

## Claims

1. A method for controlling an aircraft furniture installation (100), the furniture installation (100) comprising a seat (102A) and a movable object (102B), comprising:
- receiving (202) a command to move the seat (102A);
- receiving (204) a position of at least one element (104A, 106A, 108A) of the seat (102A) and at least one position of the movable object (102B);
- determining (206) a prohibited area (115) for the seat (102A), as a function of the position of the movable object (102B);
- moving (208) the seat (102A) in accordance with the command received; and
- comparing (210) the position of each element of the seat (102A) with the prohibited area (115);
- if the comparison indicates that the seat (102A) reaches the prohibited area (115), determining (212) a movement of the movable object (102B) separating the prohibited area (115) from the seat (102A); and
- moving (214) the movable object (102B) according to the determined movement.

2. The method according to claim 1, wherein the positions are determined in a Cartesian coordinate system.

3. The method according to claim 1 or 2, wherein the prohibited area (115) is defined by one or more straight line segments.

4. The method according to any one of claims 1 to 3, wherein the seat (102A) comprises several elements (104A, 106A, 108A) movable relative to one another, and wherein moving the seat (102A) comprises moving at least one of the elements (104A, 106A, 108A) of the seat (102A).

5. The method according to any one of claims 1 to 3, wherein the movable object (102B) comprises several elements (104B, 106B, 108B) movable relative to one another, wherein the position of the movable object (102B) is a position of at least one of the elements (104B, 106B, 108B) of the movable object (102B) and wherein the movement of the movable object (102B) comprises a movement of at least one of the elements (104B, 106B, 108B) of the movable object (102B).

6. The method according to any one of claims 1 to 5, wherein the movable object (102B) is another seat.

7. A control system (116) for a furniture installation (100) of an aircraft, the furniture installation (100) comprising a seat (102A) and a movable object (102B), the system comprising means for moving the seat (102A), means for moving the movable object (102B), means for determining a position of at least one element (104A, 106A, 108A) of the seat (102A) and means for determining at least one position of the movable object (102B), the system being designed to implement the method as claimed in any one of claims 1 to 6

8. An aircraft comprising:
- a furniture installation (100) with a seat (102A) and a movable object (102B); and
- a control system (116) as claimed in claim 7.

9. A computer program which can be downloaded from a communications network and/or recorded on a computer-readable medium, **characterized in that** it comprises instructions for making the system according to claim 7 execute the steps of a method according to any one of claims 1 to 6, when said program is executed on a computer.
